# EUROPÄISCHE PATENTSCHRIFT

(11) **EP 0 574 801 B1**
(45) Veröffentlichungstag und Bekanntmachung des Hinweises auf die Patenterteilung: **21.08.1996**
(21) Anmeldenummer: 93109175.5
(22) Anmeldetag: 08.06.1993
(51) Int. Cl.: C08F 8/30, C08F 8/34

(54) **Mit Bismaleinimidoverbindungen teilvernetzte Olefinpolymerisate**
Olefinic polymers partially crosslinked with bis-maleinimido compounds
Polymères à l'oléfin réticulés partiellement à l'aide de composés à groupement bis-maléine-imido

(30) Priorität: 17.06.1992 DE 4219861
(43) Veröffentlichungstag der Anmeldung: 22.12.1993
(73) Patentinhaber: BASF Aktiengesellschaft, 67063 Ludwigshafen (DE)
(72) Erfinder: Marczinke, Bernd Lothar, Dr., D-6720 Speyer (DE); Schwager, Harald, Dr., D-6720 Speyer (DE); Kerth, Juergen, dr., D-6719 Carlsberg (DE)

(56) Entgegenhaltungen:
- PATENT ABSTRACTS OF JAPAN vol. 11, no. 232 (C-437)(2679) 29. Juli 1987
- PATENT ABSTRACTS OF JAPAN vol. 11, no. 246 (C-439)(2693) 11. August 1987

## Beschreibung

Die vorliegende Erfindung betrifft teilvernetzte Olefinpolymerisate, die erhältlich sind durch Umsetzen eines
a) Ethylenpolymerisates mit einer Dichte von 0,90 bis 0,98 g/cm³ oder
b) eines Polymerisates aus 25 bis 95 Gew.-% eines Propylenhomopolymerisats und 5 bis 75 Gew.-% eines Propylencopolymerisats mit einpolymerisierten C₂-C₁₀-Alk-1-enen, wobei der Comonomerengehalt 1 bis 45 Gew.-%, bezogen auf das Gesamtpolymerisat, beträgt,
in Abwesenheit radikalisch zerfallender Initiatoren
mit 0,001 bis 5 Gew.-%, bezogen auf die Olefinpolymerisate, an Bismaleinimidoverbindungen der allgemeinen Formel (I) 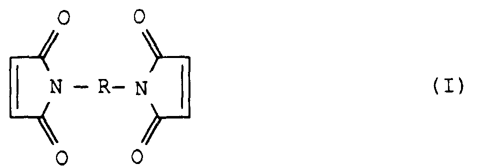 wobei R die folgende Bedeutung hat:
C₁-C₂₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₁₀-Alkyl- und/oder C₁-C₆-Alkoxy- und/oder C₁-C₄-Dialkylaminogruppen substituiert sein kann, sowie einen Rest der folgenden Formel (II)

R¹-Z-R² (II)

wobei R¹ und R² jeweils unabhängig voneinander für C₁-C₁₀-Alkyl-, C₅-C₇-Cycloalkyl-, oder C₆-C₁₀-Arylreste stehen, die ihrerseits jeweils mit einer oder mehrerer C₁-C₁₀-Alkyl- und/oder C₁-C₆-Alkoxy- und/oder C₁-C₄-Dialkylaminogruppen substituiert sein können
und Z eine C₁-C₁₀-Alkylgruppe, eine C₁-C₄-Dialkylaminogruppe, ein Sauerstoffatom oder eine Sulfongruppe bedeutet.

Weiterhin betrifft die Erfindung ein Verfahren zur Herstellung dieser teilvernetzen Olefinpolymerisate sowie Folien und Formkörper aus diesen Olefinpolymerisaten.

Es ist bekannt, daß Kautschuke auf der Basis von Ethylen und Propylen mittels Bismaleinimidoverbindungen vernetzt werden können, vorausgesetzt, daß radikalisch zerfallende Initiatoren (siehe z.B. Y.W. Chow, G.T. Knight: Gummi, Asbest, Kunstst.31, 716ff (1978); P.O. Towney et al: J. Appln. Polym. Sci. 8, 2281ff (1964)) mitverwendet werden oder energiereiche Strahlung (siehe S.M. Miller et al: J. Polym. Sci. 58, 737 (1962)) die Reaktion initiiert. Dabei führt beispielsweise der Einsatz von Peroxiden zu einem Molmassenabbau, der die mechanischen Eigenschaften der Produkte deutlich verschlechtert.

Ferner ist es bekannt, Propylencopolymerisate mit Maleinsäurederivaten zu pfropfen und anschließend die gepfropften Verbindungen mit multifunktionellen Aminen umzusetzen (DE-OS 40 22 570). Die so erhältlichen Produkte haben entweder saure oder basische Eigenschaften, was für manche technische Anwendungsgebiete nicht erwünscht ist.

Weiterhin sind in der JP-OS 269 128/90 Verfahren zum Thermoformen von Polypropylenfolien beschrieben, bei welchen Polymerisate aus Propylen, gegebenenfalls mit untergeordneten Anteilen von Ethylen, mit einem anorganischen Füller, einem Gleitmittel und einem Bismaleinimid umgesetzt werden. Als anorganischer Füller werden insbesondere Talk oder Siliciumdioxid verwendet. Als Gleitmittel werden u.a. höhere Fettsäuren, Alkohole oder Ester eingesetzt. Die dabei verwendeten Materialien werden gemeinsam in einen Extruder eingeführt, ohne daß vorher die Polymerisate aus Propylen mit dem Bismaleinimid umgesetzt werden. Die dabei erhaltenen Folien lassen sich gut formen, sind aber hinsichtlich ihrer mechanischen Belastbarkeit noch verbesserungsfähig.

Der vorliegenden Erfindung lag daher die Aufgabe zugrunde, den geschilderten Nachteilen abzuhelfen und Olefinpolymerisate mit verbesserten anwendungstechnischen Eigenschaften zu entwickeln.

Demgemäß wurden die eingangs definierten, mit Bismaleinimidoverbindungen in Abwesenheit von radikalisch zerfallenden Initiatoren teilvernetzten Olefinpolymerisate gefunden.

Erfindungsgemäß werden als Olefinpolymerisate Ethylenpolymerisate a), oder Polymerisate b) aus Propylenhomopolymerisaten und Propylencopolymerisaten verwendet.

Als Ethylenpolymerisate a) werden dabei Polyethylene mit einer Dichte von 0,90 bis 0,98 g/cm³, insbesondere mit einer Dichte von 0,91 bis 0,97 g/cm³ eingesetzt. Dabei handelt es sich überwiegend um Ethylenhomopolymerisate. Es können aber auch Copolymerisate des Ethylens mit bis zu 10 Gew.-% einpolymerisierter C₃-C₈-Alk-1-ene, beispielsweise Propylen, But-1-en, Pent-1-en oder Hex-1-en verwendet werden. Der Schmelzflußindex dieser Ethylenpolymerisate a) beträgt vorzugsweise 0,1 bis 100 g/cm³, insbesondere 1 bis 50 g/cm³, bei 190°C und einem Gewicht von 2,16 kg (bestimmt nach DIN 53 735). Der Schmelzflußindex entspricht dabei der Menge an Polymerisat, die innerhalb von 10 Minuten aus der nach DIN 53 735 genormten Prüfvorrichtung bei einer Temperatur von 190°C und unter einem Gewicht von 2,16 kg ausgepreßt wird.

Die Herstellung derartiger Polyethylene erfolgt üblicherweise durch Niederdruckpolymerisation mit metallhaltigen Katalysatoren, beispielsweise mit Hilfe von titan- und aluminiumhaltigen Ziegler-Katalysatoren, oder durch Phillips-Katalysatoren auf der Basis von chromhaltigen Verbindungen. Die Polymerisationsreaktion kann dabei mit den in der Technik üblichen Reaktoren, sowohl in der Gasphase, in Lösung oder auch in einer Aufschlämmung durchgeführt werden. Das Polyethylen kann bei der Herstellung der erfindungsgemäßen Polymermischung sowohl als Grieß als auch als Granulat verwendet werden.

Unter Polymerisaten b) versteht man in diesem Fall solche Polymere, die aus 25 bis 95 Gew.-% eines Propylenhomopolymerisats und 5 bis 75 Gew.-% eines statistischen Propylencopolymerisats mit einpolymerisierten C₂- bis C₁₀-Alk-1-enen, z.B. von Ethylen, But-1-en, Pent-1-en, Hex-1-en, Hept-1-en oder Oct-1-en bestehen. Bevorzugt werden als C₂-C₁₀-Alk-1-ene Ethylen oder But-1-en verwendet. Besonders geeignet sind dabei solche Polymerisate b), die neben 40 bis 90 Gew.-% Propylenhomopolymerisat noch 10 bis 60 Gew.-% statistisches Propylencopolymerisat mit einpolymerisierten C₂- bis C₁₀-Alk-1-enen enthalten. Der Comonomeranteil beträgt bei den Polymerisaten b) 1 bis 45 Gew.-%, vorzugsweise 1 bis 40 Gew.-%, bezogen auf das Gesamtpolymerisat.

Die Herstellung dieser Polymerisate b) erfolgt durch Polymerisation mit Hilfe von Ziegler-Natta-Katalysatoren, die im wesentlichen aus einer titanhaltigen Feststoffkomponente, die vorteilhafterweise einen feinteiligen Träger sowie eine Elektronendonorverbindung enthält, und einem Cokatalysator besteht. Als Cokatalysatoren werden Aluminiumverbindungen und vorteilhafterweise weitere Elektronendonorverbindungen verwendet. Die Polymerisation kann dabei sowohl in der Gasphase, als auch in einer Lösung oder in einer Suspension durchgeführt werden.

Als titanhaltige Feststoffkomponente kommen im allgemeinen Halogenide oder Alkoholate des drei- oder vierwertigen Titans, vorzugsweise die Chloride des Titans, insbesondere Titantetrachlorid in Betracht. Als feinteilige Träger haben sich Silicium- und Aluminiumoxide, sowie Aluminiumsilicate der Bruttosummenformel SiO₂ · aAl₂O₃, wobei a für einen Wert von 0,001 bis 2, insbesondere von 0,01 bis 0,5 steht, gut bewährt.

Die bevorzugt verwendeten Träger weisen einen Teilchendurchmesser (längste Ausdehnung) von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weiter können bei der Herstellung der titanhaltigen Feststoffkomponente Verbindungen des Magnesiums, insbesondere Magnesiumhalogenide, Magnesiumalkyle und Magnesiumaryle, sowie Magnesiumalkoxy- und Magnesiumaryloxyverbindungen eingesetzt werden, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Üblicherweise sind in der titanhaltigen Feststoffkomponente noch Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen enthalten. Bevorzugt werden als Elektronendonorverbindungen innerhalb der titanhaltigen Feststoffkomponente Phthalsäurederivate der allgemeinen Formel (III) 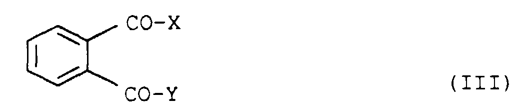 verwendet, wobei X und Y jeweils für ein Chloratom oder einen C₁- bis C₁₀-Alkoxyrest oder gemeinsam für Sauerstoff stehen. Besonders bevorzugt sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltige Feststoffkomponente kann in der Regel nach den in der Technik allgemein üblichen Methoden hergestellt werden. Bevorzugt wird ein dreistufiges Verfahren angewandt, bei dem man zunächst einen feinteiligen Träger mit einem Wassergehalt von 0,5 bis 5,0 Gew.-% mit einer Lösung der magnesiumhaltigen Verbindung in einem flüssigen Alkan versetzt. Anschließend fügt man ein Halogen oder Halogenwasserstoff hinzu und trennt den Feststoff von der flüssigen Phase ab. Diesen bringt man in ein flüssiges Alkan ein und fügt die Titanverbindung sowie die Elektronendonorverbindung hinzu, rührt und filtriert den erhaltenen festen Stoff ab. Anschließend wird mit einem flüssigen Alkan, bevorzugt Hexan oder Heptan gewaschen. In der dritten Stufe extrahiert man mit überschüssigem Titantetrachlorid oder einer im Überschuß vorliegenden Lösung von Titantetrachlorid in einem inerten Lösungsmittel, vorzugsweise einem Alkylbenzol. Danach wird das Produkt in einem flüssigen Alkan gewaschen.

Die auf diese Weise erhältliche titanhaltige Feststoffkomponente wird mit Cokatalysatoren als Ziegler-Natta-Katalysatorsystem verwendet. Als Cokatalysatoren kommen dabei Aluminiumverbindungen und weitere Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel (IV)

R³ ₙSi(OR⁴)₄₋ₙ (IV),

wobei R³ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R⁴ gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R³ eine C₁- bis C₈-Alkylgruppe oder eine 5- bis 7-gliedrige Cycloalkylgruppe, sowie R⁴ eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Die zur Darstellung der erfindungsgemäßen teilvernetzten Olefinpolymerisate benötigten Polymerisate b) lassen sich in einem zweistufigen Verfahren herstellen, wobei in einer ersten Polymerisationsstufe Propylen polymerisiert wird und diesem Polymerisat anschließend in einer zweiten Polymerisationsstufe ein Gemisch aus Propylen und einem oder mehreren C₂-C₁₀-Alk-1-enen hinzupolymerisiert wird.

Die Polymerisation des Propylens wird in der ersten Polymerisationsstufe bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Man wählt die Reaktionsbedingungen üblicherweise so, daß in der ersten Polymerisationsstufe pro mmol der Aluminiumkomponente 0,05 bis 2 kg, bevorzugt 0,1 bis 1,5 kg, Polypropylen gebildet werden.

Dieses Polypropylen wird nach Beendigung der Reaktion mit dem Katalysator aus der ersten Polymerisationsstufe ausgetragen und in die zweite Polymerisationsstufe eingeführt, wo diesem ein Gemisch von Propylen und einem oder mehreren C₂-C₁₀-Alk-1-enen, insbesondere Ethylen oder But-1-en hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80°C und die mittlere Verweilzeit des Reaktionsgemisches beträgt 1 bis 5 Stunden, bevorzugt 1,5 bis 4 Stunden.

In der zweiten Polymerisationsstufe liegt das Verhältnis der Partialdrücke zwischen Propylen und dem oder den C₂-C₁₀-Alk-1-enen üblicherweise im Bereich von 0,5:1 bis 5:1, insbesondere im Bereich von 1:1 bis 4:1. Bevorzugt wird dabei das Gewichtsverhältnis zwischen den in der ersten und in der zweiten Polymerisationsstufe umgesetzten Monomeren so bemessen, daß es in einem Bereich von 1:1 bis 20:1, insbesondere im Bereich von 2:1 bis 15:1, liegt.

Daneben besteht noch die Möglichkeit, dem Reaktionsgemisch in der zweiten Polymerisationsstufe ein C₁- bis C₈-Alkanol, insbesondere ein C₁- bis C₄-Alkanol, hinzuzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des hinzugefügten C₁- bis C₈-Alkanols wird dabei zweckmäßigerweise so bemessen, daß das Molverhältnis zwischen der Aluminiumverbindung und dem C₁-C₈-Alkanol 0,1:1 bis 10:1, insbesondere 0,2:1 bis 5:1 beträgt. Durch geeignete Wahl der Reaktionsparameter sollte ferner darauf geachtet werden, daß das Gewichtsverhältnis zwischen den in der ersten und den in der zweiten Polymerisationsstufe umgesetzten Monomeren 1:1 bis 20:1, insbesondere 1,5:1 bis 15:1, beträgt.

Erfindungsgemäß sind die teilvernetzten Olefinpolymerisate durch Umsetzen der Olefinpolymerisate mit 0,001 bis 5 Gew.-%, bevorzugt 0,01 bis 3 Gew.-%, bezogen auf das Gesamtgewicht der Olefinpolymerisate, an Bismaleinimidoverbindungen der allgemeinen Formel (I) erhältlich.

Dabei kommen Bismaleinimidoverbindungen der allgemeinen Formel I 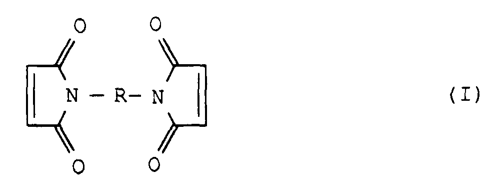 in Betracht, wobei R die folgende Bedeutung hat:
C₁-C₂₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₁₀-Alkyl- und/oder C₁-C₆-Alkoxy- und/oder C₁-C₄-Dialkylaminogruppen substituiert sein kann, sowie einen Rest der folgenden Formel (II)

R¹-Z-R² (II)

wobei R¹ und R² jeweils unabhängig voneinander für C₁-C₁₀-Alkyl-, C₅-C₇-Cycloalkyl- oder C₆-C₁₀-Arylreste stehen, die ihrerseits jeweils mit einer oder mehrerer C₁-C₁₀-Alkyl und/oder C₁-C₆-Alkoxy- und/oder C₁-C₄-Dialkylaminogruppen substituert sein können
und Z eine C₁-C₁₀-Alkylgruppe, eine C₁-C₄-Dialkylaminogruppe, ein Sauerstoffatom oder eine Sulfongruppe bedeutet.

Bevorzugt sind dabei solche Bismaleinimidoverbindungen der allgemeinen Formel (I), in der R die folgende Bedeutung hat:
C₂-C₁₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₄-Alkylgruppen substituiert sein kann, sowie einen Rest der Formel (II) R¹-Z-R², wobei R¹ und R² jeweils unabhängig voneinander für C₁-C₆-Alkyl-, C₅-C₇-Cycloalkyl- oder C₆-C₁₀-Arylreste stehen, und Z ein Sauerstoffatom oder eine Sulfongruppe bedeutet.

Als besonders bevorzugte Bismaleinimidoverbindungen werden insbesondere 1,6-Bismaleinimidohexan, 1,3-Bismaleinimidobenzol, 1,3-Bismaleinimido-4-methylbenzol, 4,4'-Bismaleinimidodiphenylmethan, 4,4'-Bismaleinimido-3,5,3',5'-tetramethyldiphenylmethan und 3,3'-Bismaleinimidodiphenylsulfon eingesetzt.

Die Bismaleinimidoverbindungen können beispielsweise dadurch hergestellt werden, daß Maleinsäureanhydrid mit den entsprechenden Diaminen und anschließend mit Essigsäure und Natriumacetat umgesetzt wird. Derartige Herstellungsverfahren sind dem Fachmann bekannt.

Vorzugsweise wird in den teilvernetzten Olefinpolymerisaten eine Bismaleinimidoverbindung verwendet. Es ist aber auch möglich, eine Mischung aus zwei oder mehreren verschiedenen Bismaleinimidoverbindungen einzusetzen.

Die erfindungsgemäßen teilvernetzten Olefinpolymerisate werden üblicherweise nach einem Verfahren hergestellt, bei dem man in Abwesenheit eines radikalisch zerfallenden Initiators 0,001 bis 5 Gew.-%, bezogen auf das Olefinpolymerisat, an Bismaleinimidoverbindungen der allgemeinen Formel (I), dem aufgeschmolzenen Olefinpolymerisat hinzumischt und die Reaktion bei Temperaturen von 180 bis 280°C, Drücken von 1 bis 100 bar und mittleren Verweilzeiten des Reaktionsgemisches von 0,2 bis 10 Minuten durchführt. Vorzugsweise werden die Bismaleinimidoverbindungen dabei in Konzentrationen von 0,01 bis 3 Gew.-%, insbesondere von 0,01 bis 1 Gew.-%, jeweils bezogen auf das Olefinpolymerisat, eingesetzt. Die Reaktion läßt sich vorteilhaft bei Temperaturen von 190 bis 270°C, insbesondere bei Temperaturen von 200 bis 260°C, Drücken von 1 bis 50 bar und Verweilzeiten von 0,2 bis 5, insbesondere von 0,5 bis 5 Minuten, durchführen.

In der Regel kann diese Reaktion in den in der Kunststofftechnik üblichen Mischapparaturen, beispielsweise Extruder oder Brabender-Mischer durchgeführt werden. Besonders gut eignen sich dabei Zweischneckenextruder. In einer bevorzugten Ausführungsform dosiert man das Olefinpolymerisat zusammen mit der Bismaleinimidoverbindung in Abwesenheit eines radikalisch zerfallenden Initiators in den Einzug eines Zweischneckenextruders, wo das Gemisch zunächst aufgeschmolzen und anschließend bei 180 bis 280°C 0,2 bis 10 Minuten lang umgesetzt wird. Die Bismaleinimidoverbindung kann auch nach dem Aufschmelzen des Olefinpolymerisats in den Extruder gegeben werden. Nach einem ebenfalls bevorzugten Herstellungsverfahren werden die Bismaleinimidoverbindungen den Olefinpolymerisaten unmittelbar nach ihrer Herstellung in einer, an den Herstellungsreaktor angeschlossenen Mischapparatur hinzugesetzt.

Die auf diese Weise erhältlichen teilvernetzten Olefinpolymerisate enthalten üblicherweise 0,001 bis 5 Gew.-% an Bismaleinimidoverbindungen. Sie sind farb- und geruchlos. Ihre Schmelzflußindizes und die xylollöslichen Anteile sind deutlich geringer als die der nicht modifizierten Olefinpolymerisate. Die Schmelzflußindizes liegen im Bereich von 0,1 bis 100 g/10 min, vorzugsweise im Bereich von 0,1 bis 50 g/10 min, jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Die teilvernetzten Olefinpolymerisate sind thermoplastisch und lassen sich daher gut verarbeiten. Sie weisen eine hohe mechanische Stabilität auf und eignen sich beispielsweise für die Herstellung von Formkörpern und Folien.

### Beispiele

Die Beispiele sowie die Vergleichsbeispiele wurden in einem Zweischneckenextruder der Firma Werner & Pfleiderer ("ZSK 40") durchgeführt. Der Polymerdurchsatz im Extruder betrug 20 kg/h, bei 150 Umdrehungen pro Minute. Die Umsetzung wurde bei Drücken von etwa 30 bar durchgeführt.

### Beispiel A1 und A2

100 Gewichtsteile eines Polymerisats b) (A) mit 80,1 Gew.-% Propylenhomopolymerisat, 19,9 Gew.-% Propylen-Ethylencopolymerisat [bestimmt durch Extraktionsfraktionierung nach W. Holtrup, Makromol. Chem. 178, 2335 (1977)], einem Gesamtethylengehalt von 11,9 Gew.-% [bestimmt durch Fouriertransformations-Infrarotspektroskopie] und einem Schmelzflußindex von 13,2 g/10 min [bei 230°C und 2,16 kg, nach DIN 53 735] wurden mit 0,1 bzw. 0,2 Gew.-Teilen 1,3-Bismaleinimidobenzol vermischt und in der Reaktionszone des Zweischneckenextruders ZSK 40 bei 240°C zur Reaktion gebracht. Die durchschnittliche Verweilzeit der Komponenten betrug 2 Minuten. Nach Beendigung der Reaktion wurde das Produkt in einem Wasserbad gekühlt, danach granuliert und getrocknet.

### Beispiele B1 und B2

Unter den Bedingungen der Beispiele A1 und A2 wurden 100 Gew.-Teile eines Polymerisats b) (B) mit 62,5 Gew.-% Propylenhomopolymerisat, 37,5 Gew.-% Propylen-Ethylencopolymerisat [bestimmt durch Extraktionsfraktionierung nach W. Holtrup, Makromol. Chem. 178, 2335 (1977)], einem Gesamtethylengehalt von 24,9 Gew.-% und einem Schmelzflußindex von 17,3 g/10 min mit 0,1 bzw. 0,2 Gew.-Teilen 4,4'-Bismaleinimido-3,5,3',5'-tetramethyldiphenylmethan umgesetzt.

Die Ergebnisse der anwendungstechnischen Untersuchungen sind der Tabelle 1 zu entnehmen.

**Tabelle 1**

| | Beispiele | | | | | |
|---|---|---|---|---|---|---|
| | A | A1 | A2 | B | B1 | B2 |
| Gehalt an Bismaleinimidoverbindung [Gew.-Teile pro 100 Gew.-Teile Polymerisat b)] | 0 | 0,1 | 0,2 | 0 | 0,1 | 0,2 |
| Schmelzflußindex* [g/10 min] | 13,2 | 11,3 | 10,6 | 17,3 | 9,3 | 9,1 |
| G-Modul** [N/mm²] | 530 | 480 | 470 | 330 | 280 | 275 |
| Kerbschlagzähigkeit*** | | | | | | |
| [kJ/m²] bei -20 °C, | 2,8 | 4,5 | 4,9 | 6,9^{a)} | 8,1^{c)} | 7,4^{c)} |
| bei -40°C | 2,1 | 3,1 | 3,4 | 16,3^{b)} | > 38,3 | > 37,3 |
| xylollösliche Anteile [%] | 20,8 | 15,1 | 13,9 | 34,8 | 24,1 | 21,1 |

| | | | | | | |
|---|---|---|---|---|---|---|
| * nach DIN 53 735, bei 230°C und 2,16 kg | | | | | | |
| ** nach DIN 53 453 | | | | | | |
| *** nach DIN 53 453 | | | | | | |
| ^{a)} 40 % Bruch | | | | | | |
| ^{b)} 60 % Bruch | | | | | | |
| ^{c)} 100 % angebrochen | | | | | | |

### Beispiel C

100 Gewichtsteile eines Polymerisats b) mit 79,7 Gew.-% Propylenhomopolymerisat, 20,3 Gew.-% Propylen-Ethylencopolymerisat, einem Gesamtethylengehalt von 12,8 Gew.-% und einem Schmelzflußindex von 12,0 g/10 min. [bei 230°C und 2,16 kg, nach DIN 53 735] wurden mit 0,2 Gew.-Teilen 1,3-Bismaleinimidobenzol bei 240°C auf dem Zweischneckenextruder "ZSK 40" zur Reaktion gebracht. Die durchschnittliche Verweilzeit betrug 2 min. Nach Beendigung der Reaktion wurde das Produkt in einem Wasserbad gekühlt, danach granuliert und getrocknet.

### Vergleichsbeispiel C'

Das im Beispiel C verwendete Polymerisat b) wurde unter den gleichen Bedingungen wie im Beispiel C mit 0,2 Gew.-Teilen 1,3-Bismaleinimidobenzol zur Reaktion gebracht. Im Unterschied zum Beispiel C erfolgte die Reaktion hierbei in Anwesenheit von 0,05 Gew.-Teilen, bezogen auf das Olefinpolymerisat, an 2,5-Dimethyl-2,5-di-(tert.-Butylperoxy)hexan.

In der nachfolgenden Tabelle 2 sind für die dabei erhaltenen Polymerisate die Werte für den Schmelzflußindex, das G-Modul und die Kerbschlagzähigkeit aufgeführt.

**Tabelle 2**

| | Beispiel C | Vergleichsbeispiel C' |
|---|---|---|
| Schmelzflußindex* [g/10 min] | 9,0 | 16.1 |
| G-Modul** [N/mm²] | 500 | 520 |
| Kerbschlagzähigkeit | | |
| [kJ/m²] bei -20 °C, | 4,9 | 3,0 |
| bei -40°C | 3,3 | 2,3 |

| | | |
|---|---|---|
| * nach DIN 53 735, bei 230°C und 2,16 kg | | |
| ** nach DIN 53 453 *** nach DIN 53 453 | | |

Aus den Ergebnissen der Tabelle 2 wird ersichtlich, daß die Umsetzung der Olefinpolymerisate mit dem Bismaleinimid in Anwesenheit von Peroxiden zu Polymerisaten mit einer verringerten Kerbschlagzähigkeit führt. Darüber hinaus ist anhand des erhöhten Schmelzflußindex ein Molmassenabbau erkennbar.

### Beispiele D1 und D2

100 Gewichtsteile eines Polyethylens (D) mit einer Dichte von 0,96 g/cm³ und einem Schmelzflußindex von 8,3 g/10 min [bei 190°C und 2,16 kg, nach DIN 53 735] wurden mit 0,1 bzw. 0,2 Gew.-Teilen 1,3-Bismaleinimidobenzol vermischt und in der Reaktionszone des Zweischneckenextruders "ZSK 40" bei 220°C zur Reaktion gebracht. Die durchschnittliche Verweilzeit betrug 1 min. Die Schmelze wurde anschließend in ein Wasserbad ausgetragen, granuliert und getrocknet.

Die Ergebnisse der anwendungstechnischen Untersuchungen sind der Tabelle 3 zu entnehmen.

**Tabelle 3**

| | Beispiele | | |
|---|---|---|---|
| | D | D1 | D2 |
| Gehalt an Bismaleinimidoverbindung [Gew.-Teile pro 100 Gew.-Teile Polymerisat b)] | 0 | 0,1 | 0,2 |
| Schmelzflußindex* [g/10 min.] | 8,3 | 6,2 | 3,7 |
| Zugfestigkeit** [N/mm²] | 25,6 | 29,9 | 36,5 |
| Reißfestigkeit*** [N/mm²] | 13,2 | 14,9 | 16,4 |

| | | | |
|---|---|---|---|
| * nach DIN 53 735, bei 190°C und 2,16 kg | | | |
| ** nach ASTM D 638 | | | |
| *** nach ASTM D 638 | | | |

### Beispiel E

100 Gewichtsteile des in den Beispielen A1 und A2 verwendeten Polymerisats b) wurden im Zweischneckenextruder ZSK 40 mit 25 Gewichtsteilen Talk bei 240°C umgesetzt und anschließend entsprechend dem Beispiel A, jedoch ohne 1,3-Bismaleinimidzugabe, aufgearbeitet. Die durchschnittliche Verweilzeit betrug 2 min.

### Vergleichsbeispiel E'

Entsprechend dem Beispiel E wurden 100 Gew.-Teile des Polymerisats b) mit 25 Gew.-Teilen Talk umgesetzt. Zusätzlich zum Beispiel E erfolgte die Umsetzung hierbei in Anwesenheit von 0,3 Gew.-Teilen 1,3-Bismaleinimidobenzol, wobei letzteres dem Polymerisat b) gleichzeitig mit dem Talk zugegeben wurde.

### Beispiel E1

Analog dem Beispiel A2 wurden 100 Gew.-Teile des Polymerisats b) (A) mit 0,3 Gew.-Teilen 1,3-Bismaleinimidobenzol umgesetzt. Nach Beendigung der Teilvernetzung wurden dem Olefinpolymerisat noch 25 Gew.-Teile Talk bei 240°C hinzugefügt und 2 min lang vermischt.

Die Ergebnisse der anwendungstechnischen Untersuchungen sind für die Beispiele E, E1 und das Vergleichsbeispiel E' in der nachfolgenden Tabelle 4 aufgeführt.

**Tabelle 4**

| | Beispiel E | Beispiel E1 | Vergleichsbeispiel E' |
|---|---|---|---|
| Gewichtsteile Polymerisat b) (A) | 100 | 100 | 100 |
| Gewichtsteile Talk | 25 | 25 | 25 |
| Gewichtsteile 1,3-Bismaleinimidobenzol | - | 0,3 | 0,3 |
| Schmelzflußindex* [g/10 min.] | 15,0 | 12,1 | 14,9 |
| Zug-E-Modul** [N/mm²] | 2500 | 2480 | 2450 |
| Reißdehnung mit Bindenaht*** [%] | 2 | 30 | 4 |

| | | | |
|---|---|---|---|
| * nach DIN 53 735, bei 230°C und 2,16 kg | | | |
| ** nach DIN 53 452 | | | |
| *** nach DIN 53 457 | | | |

Aus einem Vergleich zwischen Beispiel E, dem Beispiel E1 und dem Vergleichsbeispiel E' wird ersichtlich, daß insbesondere die teilweise Vernetzung ohne Anwesenheit von weiteren Materialien (Beispiel E1) zu vorteilhaften Produkten führt.

## Patentansprüche

1. Teilvernetzte Olefinpolymerisate, erhältlich durch Umsetzen eines
a) Ethylenpolymerisates mit einer Dichte von 0,90 bis 0,98 g/cm³ oder
b) eines Polymerisates aus 25 bis 95 Gew.-% eines Propylenhomopolymerisats und 5 bis 75 Gew.-% eines Propylencopolymerisats mit einpolymerisierten C₂-C₁₀-Alk-1-enen, wobei der Comonomerengehalt 1 bis 45 Gew.-%, bezogen auf das Gesamtpolymerisat, beträgt,
in Abwesenheit radikalisch zerfallender Initiatoren
mit 0,001 bis 5 Gew.-%, bezogen auf die Olefinpolymerisate, an Bismaleinimidoverbindungen der allgemeinen Formel (I) 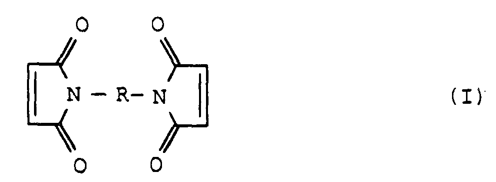 wobei R die folgende Bedeutung hat:
C₁-C₂₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₁₀-Alkyl- und/oder C₁-C₆-Alkoxy- und/oder C₁-C₄-Dialkylaminogruppen substituiert sein kann, sowie einen Rest der folgenden Formel (II)
R¹-Z-R² (II)
wobei R¹ und R² jeweils unabhängig voneinander für C₁-C₁₀-Alkyl-, C₅-C₇-Cycloalkyl- oder C₆-C₁₀-Arylreste stehen, die ihrerseits jeweils mit einer oder mehrerer C₁-C₁₀-Alkyl- und/oder C₁-C₆-Alkoxy- und/oder C₁-C₄-Dialkylaminogruppen substituiert sein können
und Z eine C₁-C₁₀-Alkylgruppe, eine C₁-C₄-Dialkylaminogruppe, ein Sauerstoffatom oder eine Sulfongruppe bedeutet.

2. Teilvernetzte Olefinpolymerisate nach Anspruch 1, erhältlich durch Umsetzen der Bismaleinimidoverbindungen der allgemeinen Formel (I) mit Polymerisaten b), die aus 40 bis 90 Gew.-% eines Propylenhomopolymerisats und 10 bis 60 Gew.-% eines Propylencopolymerisats mit 2 bis 40 Gew.-%, bezogen auf das Gesamtpolymerisat an einpolymerisierten C₂-C₁₀-Alk-1- enen bestehen.

3. Teilvernetzte Olefinpolymerisate nach den Ansprüchen 1 oder 2, erhältlich durch Umsetzen der Bismaleinimidoverbindungen der allgemeinen Formel I mit Ethylenpolymerisaten a) mit einer Dichte von 0,91 bis 0,97 g/cm³.

4. Teilvernetzte Olefinpolymerisate nach den Ansprüchen 1 bis 3, wobei als Bismaleinimidoverbindungen der allgemeinen Formel (I) Verbindungen verwendet werden, in der R die folgende Bedeutung hat:
C₂-C₁₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₄-Alkylgruppen substituiert sein kann, sowie einen Rest der Formel (II) R¹-Z-R², wobei R¹ und R² jeweils unabhängig voneinander für C₁-C₆-Alkyl-, C₅-C₇-Cycloalkyl- oder C₆-C₁₀-Arylreste stehen, und Z ein Sauerstoffatom oder eine Sulfongruppe bedeutet.

5. Teilvernetzte Olefinpolymerisate nach den Ansprüchen 1 bis 4, erhältlich durch Umsetzen der Olefinpolymerisate mit einer Bismaleinimidoverbindung, ausgewählt aus der Gruppe 1,6-Bismaleinimidohexan, 1,3-Bismaleinimidobenzol, 1,3-Bismaleinimido-4-methylbenzol, 4,4'-Bismaleinimidodiphenylmethan, 4,4'-Bismaleinimido-3,5,3',5'-tetramethyldiphenylmethan und 3,3'-Bismaleinimidodiphenylsulfon.

6. Verfahren zur Herstellung von teilvernetzten Olefinpolymerisaten gemäß den Ansprüchen 1 bis 5, dadurch gekennzeichnet, daß man die Olefinpolymerisate mit 0,001 bis 5 Gew.-%, bezogen auf die Olefinpolymerisate, an Bismaleinimidoverbindungen der allgemeinen Formel (I) bei Temperaturen von 180 bis 280°C, Drücken von 1 bis 100 bar und mittleren Verweilzeiten des Reaktionsgemisches von 0,2 bis 10 Minuten in Abwesenheit radikalisch zerfallender Initiatoren umsetzt.

7. Verfahren zur Herstellung von teilvernetzten Olefinpolymerisaten nach Anspruch 6, dadurch gekennzeichnet, daß man die Bismaleinimidoverbindungen der allgemeinen Formel (I), den Olefinpolymerisaten unmittelbar nach deren Herstellung in einer, an den Herstellungsreaktor angeschlossenen Mischapparatur hinzusetzt.

8. Folien und Formkörper aus den teilvernetzten Olefinpolymerisaten gemäß den Ansprüchen 1 bis 5.

## Revendications

1. Polymères oléfiniques partiellement réticulés, obtenus par réaction
a) d'un polymère d'éthylène ayant une masse volumique de 0,90 à 0,98 g/cm³ ou
b) d'un polymère composé de 25 à 95% en poids d'un homopolymère de propylène et de 5 à 75% en poids d'un copolymère de propylène avec des alcènes-1 en C₂-C₁₀ en liaison polymère, la teneur en comonomères étant comprise entre 1 et 45% en poids par rapport au polymère total,
en l'absence d'amorceurs radicalaires,
avec 0,001 à 5% en poids, par rapport aux polymères oléfiniques, de composés bis-maléimido de formule générale (I) 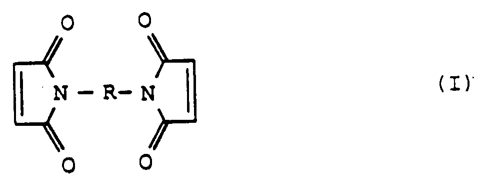 dans laquelle R a la signification suivante:
reste alkyle en C₁-C₂₀ qui peut être interrompu par un ou plusieurs atomes d'oxygène, cycloalkyle en C₅-C₇, aryle en C₆-C₁₅, le reste cycloalkyle ou aryle pouvant être substitué de son côté par un ou plusieurs groupements alkyle en C₁-C₁₀ et/ou alcoxy en C₁-C₆ et/ou dialkylamino en C₁-C₄, ainsi qu'un reste répondant à la formule (II) suivante
R¹-Z-R² (II)
où R¹ et R² sont mis chacun, indépendamment l'un de l'autre, pour un reste alkyle en C₁-C₁₀, cycloalkyle en C₅-C₇ ou aryle en C₆-C₁₀, qui peut être substitué de son côté par un ou plusieurs groupements alkyle en C₁-C₁₀ et/ou alcoxy en C₁-C₆ et/ou dialkylamino en C₁-C₄,
et Z représente un groupement alkyle en C₁-C₁₀, dialkylamino en C₁-C₄, un atome d'oxygène ou un groupement sulfo.

2. Polymères oléfiniques partiellement réticulés selon la revendication 1, obtenus par réaction des composés bis-maléimido de formule générale (I) avec des polymères b) qui se composent de 40 à 90% en poids d'un homopolymère de propylène et de 10 à 60% en poids d'un copolymère de propylène avec 2 à 40% en poids, par rapport au polymère total, d'alcènes-1 en C₂-C₁₀ en liaison polymère.

3. Polymères oléfiniques partiellement réticulés selon la revendication 1 ou 2, obtenus par réaction des composés bis-maléimido de formule générale (I) avec des polymères d'éthylène a) ayant une masse volumique de 0,91 à 0,97 g/cm³.

4. Polymères oléfiniques partiellement réticulés selon l'une quelconque des revendications 1 à 3, les composés bis-maléimido de formule générale (I) utilisés étant des composés dans lesquels R a la signification suivante:
reste alkyle en C₂-C₁₀ qui peut être interrompu par un ou plusieurs atomes d'oxygène, cycloalkyle en C₅-C₇, aryle en C₆-C₁₅, le reste cycloalkyle ou aryle pouvant être substitué de son côté par un ou plusieurs groupements alkyle en C₁-C₄, ainsi qu'un reste de formule (II) R¹-Z-R², R¹ et R² étant mis chacun, indépendamment l'un de l'autre, pour un reste alkyle en C₁-C₆, cycloalkyle en C₅-C₇ ou aryle en C₆-C₁₀, et Z représentant un atome d'oxygène ou un groupement sulfo.

5. Polymères oléfiniques partiellement réticulés selon l'une quelconque des revendications 1 à 4, obtenus par réaction des polymères oléfiniques avec un composé bis-maléimido choisi dans le groupe du 1,6-bis-maléimidohexane, du 1,3-bis-maléimidobenzène, du 1,3-bis-maléimido-4-méthylbenzène, du 4,4'-bis-maléimidophénylméthane, du 4,4'-bis-maléimido-3,5,3',5'-tétraméthyldiphénylméthane et de la 3,3'-bis-maléimidodiphénylsulfone.

6. Procédé de préparation de polymères oléfiniques partiellement réticulés selon l'une quelconque des revendications 1 à 5, caractérisé en ce que l'on fait réagir les polymères oléfiniques avec 0,001 à 5% en poids, par rapport aux polymères oléfiniques, de composés bis-maléimido de formule générale (I), à une température de 180 à 280°C, sous une pression de 1 à 100 bar et avec une durée moyenne de séjour du mélange réactionnel de 0,2 à 10 min, en l'absence d'amorceurs radicalaires.

7. Procédé de préparation de polymères oléfiniques partiellement réticulés selon la revendication 6, caractérisé en ce que l'on ajoute les composés bis-maléimido de formule générale (I) aux polymères oléfiniques immédiatement après leur préparation, dans un appareil mélangeur relié au réacteur de préparation.

8. Feuilles et corps moulés, fabriqués à partir des polymères oléfiniques partiellement réticulés selon l'une quelconque des revendications 1 à 5.

## Claims

1. A partially crosslinked olefin polymer, obtainable by reacting
a) an ethylene polymer having a density of from 0.90 to 0.98 g/cm³ or
b) a polymer of from 25 to 95% by weight of a propylene homopolymer and from 5 to 75% by weight of a propylene copolymer with polymerized C₂-C₁₀-alk-1-enes, the comonomer content being from 1 to 45% by weight, based on the total polymer,
in the absence of free radical initiators,
with from 0.001 to 5% by weight, based on the olefin polymer, of a bismaleimido compound of the formula (I) 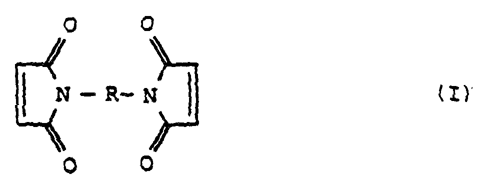 where R is C₁-C₂₀-alkyl which may be interrupted by one or more oxygen atoms, or is C₅-C₇-cycloalkyl or C₆-C₁₅-aryl, each of which in turn may be substituted by one or more C₁-C₁₀-alkyl and/or C₁-C₆-alkoxy and/or C₁-C₄-dialkylamino groups, or is a radical of the following formula (II)
R¹-Z-R² (II)
where R¹ and R² independently of one another are each C₁-C₁₀-alkyl, C₅-C₇-cycloalkyl or C₆-C₁₀-aryl, each of which in turn may be substituted by one or more C₁-C₁₀-alkyl and/or C₁-C₆-alkoxy and/or C₁-C₄-dialkylamino groups, and Z is C₁-C₁₀-alkyl, C₁-C₄-dialkylamino, oxygen or sulfonyl.

2. A partially crosslinked olefin polymer as claimed in claim 1, obtainable by reacting a bismaleimido compound of the formula (I) with a polymer b) which consists of from 40 to 90% by weight of a propylene homopolymer and from 10 to 60% by weight of a propylene copolymer with from 2 to 40% by weight, based on the total polymer, of polymerized C₂-C₁₀-alk-1-enes.

3. A partially crosslinked olefin polymer as claimed in claim 1 or 2, obtainable by reacting a bismaleimido compound of the formula I with an ethylene polymer a) having a density of from 0.91 to 0.97 g/cm³.

4. A partially crosslinked olefin polymer as claimed in any of claims 1 to 3, wherein a compound in which R is C₂-C₁₀-alkyl which may be interrupted by one or more oxygen atoms, or is C₅-C₇-cycloalkyl or C₆-C₁₅-aryl, each of which in turn may be substituted by one or more C₁-C₄-alkyl groups, or is a radical of the formula (II) R¹-Z-R², where R¹ and R² independently of one another are each C₁-C₆-alkyl, C₅-C₇-cycloalkyl or C₆-C₁₀-aryl, and Z is oxygen or sulfonyl, is used as the bismaleimido compound of the formula (I).

5. A partially crosslinked olefin polymer as claimed in any of claims 1 to 4, obtainable by reacting an olefin polymer with a bismaleimido compound selected from the group consisting of 1,6-bismaleimidohexane, 1,3-bis-maleimidobenzene, 1,3-bismaleimido-4-methylbenzene, 4,4'-bismaleimidodiphenylmethane, 4,4'-bismaleimido-3,5,3',5'-tetramethyldiphenylmethane and 3,3'-bismaleimidodiphenyl sulfone.

6. A process for the preparation of a partially crosslinked olefin polymer as claimed in any of claims 1 to 5, wherein the olefin polymer is reacted with from 0.001 to 5% by weight, based on the olefin polymer, of a bismaleimido compound of the formula (I) at from 180 to 280°C and from 1 to 100 bar and in an average residence time of the reaction mixture of from 0.2 to 10 minutes in the absence of free radical initiators.

7. A process for the preparation of a partially crosslinked olefin polymer as claimed in claim 6, wherein the bismaleimido compound of the formula (I) is added to the olefin polymer immediately after its preparation in a mixing apparatus connected to the preparation reactor.

8. A film or molding of a partially crosslinked olefin polymer as claimed in any of claims 1 to 5.
